(19) Europäisches Patentamt
European Patent Office
Office européen des brevets

(11) **EP 2 589 620 A1**

(12) **EUROPEAN PATENT APPLICATION**
published in accordance with Art. 153(4) EPC

(43) Date of publication:
**08.05.2013 Bulletin 2013/19**

(21) Application number: **11800457.1**

(22) Date of filing: **30.06.2011**

(51) Int Cl.:
*C08J 9/26* (2006.01)   *B01D 63/10* (2006.01)
*B01D 69/10* (2006.01)   *B01D 69/12* (2006.01)
*B01D 71/46* (2006.01)   *B32B 5/18* (2006.01)
*B32B 27/34* (2006.01)   *B32B 27/38* (2006.01)
*C08L 63/00* (2006.01)

(86) International application number:
**PCT/JP2011/003766**

(87) International publication number:
**WO 2012/001987 (05.01.2012 Gazette 2012/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2010 JP 2010148961**

(71) Applicant: **Nitto Denko Corporation
Osaka 567-8680 (JP)**

(72) Inventors:
• **MURAKI, Yuuzou
IBARAKI-SHI
Osaka 567-8680 (JP)**

• **HIRO, Atsushi
IBARAKI-SHI
Osaka 567-8680 (JP)**
• **HARADA, Noriaki
IBARAKI-SHI
Osaka 567-8680 (JP)**

(74) Representative: **Hart-Davis, Jason et al
Cabinet Beau de Loménie
158, rue de l'Université
75340 Paris Cedex 07 (FR)**

(54) **METHOD FOR PRODUCING POROUS THERMOSETTING RESIN SHEET AND COMPOSITE SEPARATION MEMBRANE USING SAME**

(57)    In the step of extracting and removing a porogen from a thermosetting resin sheet 1 containing the porogen, the porogen is extracted and removed by bringing the thermosetting resin sheet 1 into contact with a first liquid that has a relatively low temperature, and subsequently bringing the thermosetting resin sheet 1 into contact with a second liquid that has a relatively high temperature. Preferably, the temperatures of the first liquid and the second liquid are lower than or equal to the glass-transition temperature of the thermosetting resin sheet 1.

FIG.1

**Description**

TECHNICAL FIELD

The present invention relates to a method for producing a porous thermosetting resin sheet, and to a composite separation membrane using the porous thermosetting resin sheet.

BACKGROUND ART

A porous thermosetting resin sheet can be used as, for example, a support for a composite semipermeable membrane. If a skin layer made of polyamide or the like is formed on the porous thermosetting resin sheet, the resultant product can be used as a composite semipermeable membrane (see Patent Literature 1, for example).
Various methods have been conventionally used for producing such porous sheets. For example, there is known a method which uses a phase separation method, an extraction method, or the like, and in which a component for forming continuous pores is mixed in a resin, and a porous sheet is formed by extracting and removing the component. Conventionally, in such a technique, a resin is formed into a sheet shape by a method such as melt extrusion molding or cutting of a cylindrical resin block, and then a pore-forming agent, which is generally called a porogen or plasticizer, is extracted and removed from the resin sheet to make a porous sheet. Methods for the extraction and removal include methods using various solvents or aqueous solutions, and methods using supercritical carbon dioxide (see Patent Literature 2 or 3, for example).

CITATION LIST

Patent Literature

PTL 1: JP2010-099654
PTL 2: JP2007-209412
PAL 3: JP2010-121122

SUMMARY OF INVENTION

Technical Problem

However, attempting extraction and removal of a porogen in a high-temperature liquid causes defects such as deformation of a resin sheet due to softening. Therefore, it has been difficult to enhance the efficiency of removal.
The present invention aims to provide a method for producing a porous thermosetting resin sheet by which, when a porous thermosetting resin sheet is fabricated by extracting and removing a porogen from a thermosetting resin sheet containing the porogen, the porogen can be efficiently removed while preventing damage to and shape deformation of the sheet.

Solution to Problem

That is, the present invention provides a method for producing a porous thermosetting resin sheet, the method including the step of extracting and removing a porogen from a thermosetting resin sheet containing the porogen. In the method, the porogen is extracted and removed by bringing the thermosetting resin sheet into contact with a first liquid that has a relatively low temperature, and subsequently bringing the thermosetting resin sheet into contact with a second liquid that has a relatively high temperature.
Extraction and removal of the porogen can be performed by, for example, sequential immersion in a plurality of liquid baths arranged in order of increasing temperature. The temperatures of the liquid baths for extracting and removing the porogen are preferably lower than or equal to the glass-transition temperatures of the thermosetting resin sheet, and liquids in the liquid baths are preferably water or aqueous solutions. Furthermore, in the liquid baths for extracting and removing the porogen, the temperature of a liquid bath (first bath) with which the thermosetting resin sheet comes into contact first is preferably 30°C or higher and 55°C or lower, and the temperatures of the second and subsequent liquid baths are preferably 60°C or higher and 90°C or lower.
Preferably, the liquid baths for extracting and removing the porogen are stirred, and the liquids are caused to flow. The thermosetting resin is preferably an epoxy resin. Furthermore, the porogen is preferably polyethylene glycol.

In another aspect, the present invention provides a composite separation membrane including: a porous thermosetting resin sheet produced by the method of the present invention and having an average pore diameter of 0.01 μm to 0.4 μm: and a polyamide-based skin layer provided on a surface of the porous thermosetting resin sheet.

In still another aspect, the present invention provides a spiral separation membrane element including: a perforated hollow tube; and a layered body wound around the perforated hollow tube, the layered body including composite separation membrane of the present invention, and a flow path member combined with the composite separation membrane.

Advantageous Effects of Invention

According to the method of the present intention, in the step of extracting and removing a porogen, a thermosetting resin sheet is brought into contact with a first liquid of low temperature, and then the thermosetting resin sheet is brought into contact with a second liquid of high temperature. This makes it possibly to efficiently remove the porogen while preventing damage to the sheet and shape deformation of the sheet.

BRIEF DESCRIPTION OF DRAWINGS

FIG. 1 is a schematic view showing an example of the step of extracting and removing a porogen according to the present invention.

FIG. 2 is a schematic view showing another example of the step of extracting and removing a porogen according to the present invention.

FIG. 3 is a schematic view showing still another example of the step of extracting and removing a porogen according to the present invention.

FIG. 4 is a partially-cutaway view of a layered body used for a spiral separation membrane element.

FIG. 5 is a photograph of a porous epoxy resin sheet obtained in Example 1.

FIG. 6 is a photograph of a porous epoxy resin sheet obtained in Comparative Example 1.

DESCRIPTION OF EMBODIMENT

Hereinafter, an embodiment of the present invention will be described in detail. However, the present invention is not limited to the embodiment described below.

A porous thermosetting resin sheet is typically produced by performing the step of fabricating a thermosetting resin sheet containing a porogen, and the step of removing the porogen from the thermosetting resin sheet.

The method for fabricating a thermosetting resin sheet containing a porogen is not particularly limited. As will be described later, a thermosetting resin sheet can be obtained by forming a thermosetting resin composition containing a porogen into a sheet shape, and then performing a curing step. Alternatively, a thermosetting resin sheet can also be obtained by making a block-shaped cured product using a thermosetting resin composition containing a porogen, and then forming the cured product into a sheet shape.

Next, the porogen is extracted and removed from the thermosetting resin sheet. Specifically, a treatment liquid that is capable of dissolving the porogen is brought into contact with the thermosetting resin sheet to extract and remove the porogen from thermosetting resin sheet. The method for bringing the treatment liquid into contact with the thermosetting resin sheet is not particularly limited. A typical method is to immerse the thermosetting resin sheet in a liquid bath holding the treatment liquid (bathing liquid). That is, when a first liquid and a second liquid are held as the treatment liquids in a first bath and a second bath, respectively, the porogen can be extracted and removed by immersing the thermosetting resin sheet in the first bath and subsequently in the second bath. With this method, since the thermosetting resin sheet can be evenly brought into contact with the treatment liquids, a porous resin sheet that has a uniform three-dimensional net-like skeleton and uniform pores is made easier to obtain.

Generally, when a porogen is extracted in a liquid bath, the higher the temperature of the bathing liquid is, the better the efficiency of extraction is. The thermosetting resin sheet is softened at a temperature higher than a glass-transition temperature. In particular, since the thermosetting resin sheet contains a porogen, an apparent glass-transition temperature of the thermosetting resin sheet is low. In the present embodiment, a plurality of liquid baths are arranged in order of increasing temperature, and the porogen is extracted and removed by immersing the thermosetting resin sheet sequentially in the plurality of liquid baths in ascending order of temperature. For example, a method is used in which the temperature of the first bath is set to be low, and the temperatures of the second and subsequent baths are increased in order. Specifically, the temperature of the first liquid can be lower than or equal to a glass-transition temperature of the thermosetting resin sheet that has not been brought into contact with the first liquid yet (that has not been immersed in the first bath yet). In addition, the temperature of the second liquid can be lower than or equal to a glass-transition temperature of the thermosetting resin sheet that has been brought into contact with the first liquid (that has been drawn from the first bath) and that has not been brought into contact with the second liquid yet (that has not been immersed in the second bath yet). Each of the plurality of liquid baths is preferably maintained at a temperature lower than or equal to a glass-transition temperature of the thermosetting resin sheet from which the porogen is about to be extract and removed by using the liquid bath. In this case, the extraction and removal can be carried out with a high efficiency, and a porous thermosetting resin sheet having high quality can be obtained. After the thermosetting resin sheet is brought into contact with the first liquid but before the thermosetting resin sheet is brought into contact with the second liquid, the thermosetting resin sheet may be brought into contact with a treatment liquid having a temperature lower than that of the first liquid.

Any substances highly compatible with the porogen can be used as bathing liquids for extraction and removal of the porogen without any limitation, and the bathing liquids may be selected as appropriate depending on the type of the porogen. The examples include water, DMF (N,N-dimethylformamide), DMSO (dimethylsulfoxide), THF (tetrahydrofuran), mixed solvents thereof, and aqueous solutions thereof. In particular, pure water, for which aftertreatment is easy, is preferably used.

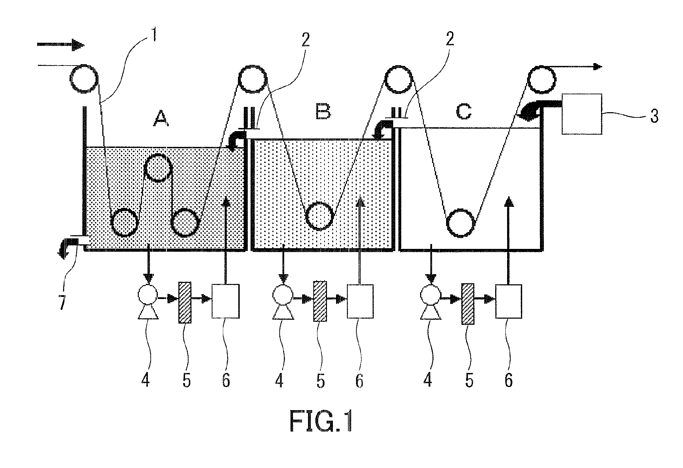

The first liquid and the second liquid may have the same composition, or may have different compositions. The first liquid and the second liquid can each be water or an aqueous solution. If the first liquid and the second liquid have the same composition, the ratio of the amount of waste liquid to the amount of used liquid can be reduced, as will be described later with reference to FIG. 1. The same is true for the case where the number of liquid baths is three or more.

The temperatures of the bathing liquids (treatment liquids) are preferably set so as not to exceed the glass-transition temperatures (Tg) of the thermosetting resin sheet containing the porogen. The glass-transition temperature increases as the porogen is removed. Therefore, it is recommended that the temperatures of the bathing liquids of the second and subsequent baths be set so as not to exceed the glass-transition temperatures. For example, the temperature of the bathing liquid (first liquid) of the first bath is preferably set to be 15°C or higher and 55°C or slower (for 30°C or higher and 55°C or lower). The temperature of the bathing liquid (second liquid) of the second bath is preferably set in a range of 60°C or higher and 90°C or lower. The temperatures of the bathing liquids of the baths following the second bath can also be set in a range of 60°C or higher and 90°C or lower. The temperature of the first bath is preferably set to be as high as possible, to the extent that the temperature is lower than or equal to the glass-transition temperature of the thermosetting resin sheet. The temperatures of the second and subsequent baths may be determined as appropriate on the condition that the temperatures are lower than or equal to the boiling points of the bathing liquids, and lower than or equal to the glass-transition temperatures of the thermosetting resin sheet.

For example, the temperatures of the bathing liquids can be set within a temperature range from (Tg - 50°C) to (Tg) (Unit: °C). The glass-transition temperature (Tg) is a glass-transition temperature of the thermosetting resin sheet that is about to be immersed in a bath (that is about to be brought into contact with a treatment liquid).

A time period of immersion in each bath may be set as appropriate depending on the degree of removal of the porogen. A time period of immersion in the first bath is about 5 seconds or longer and 120 seconds or shorter, and preferably 15 seconds or lounger and 60 seconds or shorter. If the time period of immersion in the first bath is too short, the porogen is not removed sufficiently, and the temperatures of the bathing liquids of the second and subsequent baths cannot be increased sufficiently, which may reduce the removal efficiency as a whole. In addition, if the time period of immersion in the first bath is too long, removal cannot be conducted early by the second and subsequent baths containing high-temperature bathing liquids and providing high removal efficiency. This also may reduce the removal efficiency as a whole. Accordingly, the time period of immersion in each of the second and subsequent baths is, but not limited to, about 5 seconds or longer and 60 seconds or shorter, and is preferably 10 seconds or longer and 45 seconds or shorter. A method is particularly preferred in which removal in the second and subsequent baths is quickly conducted by increasing the temperatures.

The number of the liquid baths in total is two or more, and is not particularly limited. The number of the liquid baths is preferably as large as possible because the larger the number is, the smaller the amounts of used liquid and waste liquid are and the better the energy efficiency becomes, which allows reduction of the running cost. However, in view of the initial cost and the time and effort for maintenance, the number is preferably four or less.

Preferably, each bathing liquid is stirred or circulated. The more the porogen is extracted and removed, the higher the porogen concentration in the bathing liquid is, and the more difficult the extraction becomes. Accordingly, the porogen concentration in the bathing liquid needs to be managed. In this case, it is preferable to stir the bathing liquid so as to prevent unevenness of the porogen concentration in the bath, and it is also preferable to circulate the bathing liquid externally in order to keep the temperature of the bathing liquid constant. Furthermore, among the liquid baths, the porogen concentration decreases, and the temperature increases with advancing stages. Accordingly, counterflow means may be used that feeds a bathing liquid of one stage into a bathing liquid of the preceding stage and thereby causes the bathing liquids to flow in a direction opposite to the direction of conveyance of the sheet.

Next, a configuration of an apparatus for performing the step of extracting and removing a porogen will be specifically described based on FIG. 1. However, the present invention is not limited thereto.

FIG. 1 shows an example of a configuration in which three baths are arranged. A thermosetting resin sheet 1 is conveyed through a first bath A having a bathing liquid of 45°C, a second bath B having a bathing liquid of 60°C, and a third bath C having a bathing liquid of 80°C, and thereby a porogen is extracted and removed. Meanwhile, the flow direction of the bathing liquids is opposite to the direction of the travel of the thermosetting resin sheet 1. Pure water heated to 80°C is supplied to the third bath C from a bathing liquid sypplying unit 3, and the bathing liquids move to the second bath B, and then to the first bath A, via bathing liquid flow outsets 2 located between the liquid baths. In each bath, removal of impurities from the bathing liquid, and management of the porogen concentration and temperature of the bathing liquids, are performed by an impurity removing filter 5 and a temperature adjuster 6 via a circulation pump 4. The bathing liquids are finally discharged from a bathing liquid discharge port 7 provided in the first bath A.

The thermosetting resin sheet 1 has an elongated shape. The conveyance route of the thermosetting resin sheet 1 is set by means of a plurality of conveying rollers so that the thermosetting resin sheet 1 being conveyed from a winding-off position to a winding-up position passes through the first bath A, the second bath B, and the third bath C in this order. This can achieve high productivity.

The first bath A, the second bath B, and the third bath C can each be stirred by a commercially-available stirrer. The porogen may be extracted and removed while the first liquid held in the first bath A, the second liquid held in the second bath B, and a third liquid held in the third bath C are flowing. In this case, the efficiency of removal of the porogen can be enhanced. The thermosetting resin sheet 1 is conveyed along the conveyance route at a constant speed. However, the conveyance speed need not be constant. The thermosetting resin sheet 1 may be intermittently conveyed.

In the example shown in FIG. 1, a conveyance distance of the thermosetting resin sheet 1 in the first bath A is longer than a conveyance distance of the thermosetting resin sheet 1 in the second bath B. That is, a time period of contact (specifically, time period of immersion) of the thermosetting resin sheet 1 with the bathing liquid (first liquid) held in the first bath A is longer than a time period of contact of the thermosetting resin sheet 1 with the bathing liquid (second liquid) held in the second bath B. This allows a relatively sufficient amount of the porogen to be removed from the thermosetting resin sheet 1 in the first bath A. Therefore, the thermosetting resin sheet 1 has a sufficiently increased glass-transition temperature when the thermosetting resin sheet 1 leaves the first bath A. As a result, the temperature of the second bath B can be sufficiently increased to enhance the removal efficiency in the second bath B.

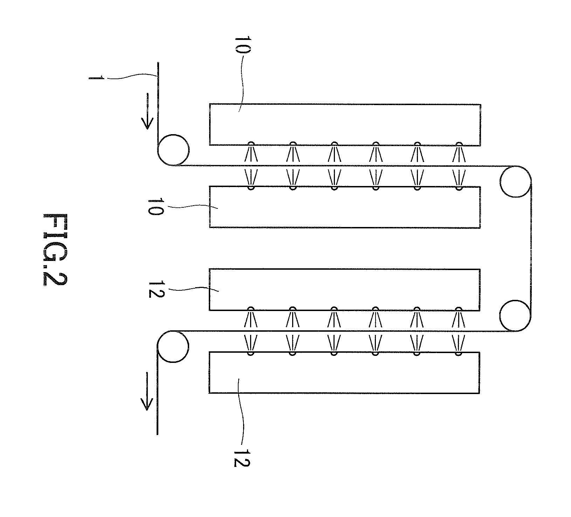

The method for bringing a treatment liquid for extraction of the porogen into contact with the thermosetting resin sheet is not limited to immersion. As shown in FIG. 2, a treatment liquid may be sprayed onto the thermosetting resin sheet 1. In the example shown in FIG. 2, the thermosetting resin sheet 1 having an elongated shape is conveyed along a conveyance route at a constant speed. A first spray device 10 is disposed on the upstream side of the conveyance route, and a second spray device 12 is disposed on the downstream side. A first liquid that has a relatively low temperature is sprayed onto the thermosetting resin sheet 1 from the first spray device 10. A second liquid that has a relatively high temperature is sprayed onto the thermosetting resin sheet 1 from the second spray device 12. Also with this method, the porogen can be efficiently removed from the thermosetting resin sheet 1 while preventing damage and shape deformation.

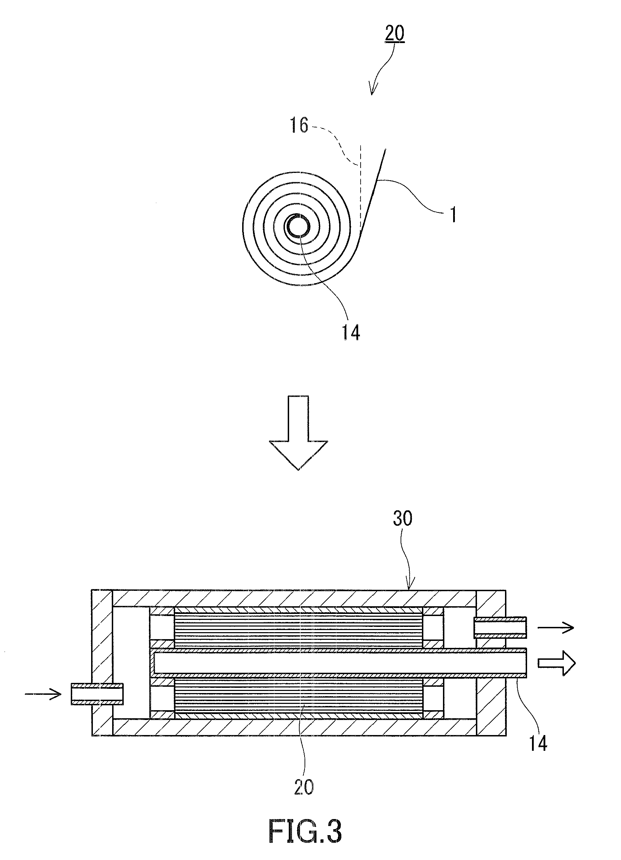

The methods described with reference to FIG. 1 and FIG. 2 are each a continuous process for removing the porogen while conveying the thermosetting resin sheet 1 having an elongated shape, and are excellent in productivity. However, a continuous process is not essential. As shown in FIG. 3, the porogen can also be removed by a batch process. Specifically, the thermosetting resin sheet 1 is wound around a core 14 together with a spacer 16 to fabricate a wound body 20. The spacer 16 forms a flow path for flowing a treatment liquid around the thermosetting resin sheet 1. For example, a net or a fabric can be used as the spacer 16. Examples of the constituent material of the spacer 16 is made include polyolefin resins such as polyethylene and polypropylene, polyester resins such as polyethylene terephthalate, and polyphenylene resins such as polyphenylene sulfide.

Next, the wound body 20 is placed in a pressure container 30, and the pressurized treatment liquid is brought into contact with one side surface of the wound body 20 so that the treatment liquid flows from the one side surface of the wound body 20 to the other side surface. The treatment liquid moves inside the wound body 20 as far as the other side surface while dissolving the porogen. The porogen is thus removed from the thermosetting resin sheet 1, and a porous sheet is obtained.

Next, the step of fabricating a thermosetting resin sheet containing a porogen will be additionally described. First, a thermosetting resin composition containing a thermosetting resin, a curing agent, and a porogen is prepared. Specifically, the thermosetting resin and the curing agent are dissolved in the porogen to prepare a uniform solution (resin composition). A thermosetting resin sheet can be formed from this solution.

The thermosetting resin includes a thermosetting resin that allows a porous sheet having continuous pores to be formed by using a curing agent and a porogen. The examples include epoxy resins, phenolic resins, melamine resins, urea resins, alkyd resins, unsaturated polyester resins, polyurethane, thermosetting polyimides, silicone resins, and diallyl phthalate resins. In particular, from the standpoint of cost, practicality, etc., epoxy resins can be preferably used.

Examples of epoxy resins include: aromatic epoxy resins including polyphenyl-based epoxy resins such as bisphenol A-type epoxy resins, brominated bisphenol A-type epoxy resins, bisphenol F-type epoxy resins, bisphenol AD-type epoxy resins, stilbene-type epoxy resins, biphenyl-type epoxy resin, bisphenol A-type novolac epoxy resins, cresol novolac-type epoxy resins, diaminodiphenylmethane-type epoxy resins, and tetrakis(hydroxyphenyl)ethane-based epoxy resins, fluorene-containing epoxy resins, triglycidyl isocyanurate, and epoxy resins containing a heteroaromatic ring (e.g., triazine ring); and non-aromatic epoxy resins such as aliphatic glycidyl ether-type epoxy resins, aliphatic glycidyl ester-type epoxy resins, cycloaliphatic glycidyl ether-type epoxy resins, and cycloaliphatic glycidyl ester-type epoxy resins. One of these may be used singly, or two or morse thereof may be used in combination.

The porous resin sheet preferably has a uniform three-dimensional net-like skeleton and uniform pores. In order to form a uniform three-dimensional net-like skeleton and uniform pores, and also to ensure chemical resistance and membrane strength, it is preferable to use, among the epoxy resins, at least one aromatic epoxy resin selected from the group consisting of bisphenol A-type epoxy resins, brominated bisphenol A-type epoxy resins, bisphenol F-type epoxy resins, bisphenol AD-type epoxy resins, fluorene-containing epoxy resins, and triglycidyl isocyanurate, or at least one cycloapliphatic epoxy resin selected from the group consisting of cycloaliphatic glycidyl ether-type epoxy resins and cycloaliphatic glycidyl ester-type epoxy resins. In particular, it is preferable to use at least one aromatic epoxy resin that has an epoxy, equivalent of 6000 or less and a melting point of 170°C or lower and that is selected from the group consisting of bisphenol A-type epoxy resins, brominated bisphenol A-type epoxy resins, bisphenol AD-type epoxy resins, fluorene-containing epoxy resins, and triglycidyl isocyanurate, or at least one cycloaliphatic epoxy resin that has an epoxy equivalent of 6000 or less and a melting point of 170°C or lower and that is selected from the group consisting of cycloaliphatic glycidyl ether-type epoxy resins and cycloaliphatic glycidyl ester-type epoxy resins.

Examples of the curing agent include: aromatic curing agents such as aromatic amines (e.g., meta-phenylenediamine, diaminodiphenylmethane, diaminodiphenyl sulfone, benzyldimethylamine, and dimethylamino methylbenzene), aromatic acid anhydrides (e.g., phthalic anhydride, trimellitic anhydride, and pyromellitic anhydride), phenolic resins, phenolic novolac resins, and heteroaromatic ring-containing amines (e.g., triazine ring-containing amines); and non-aromatic curing agents such as aliphatic amines (e.g., ethylenediamine, diethylenetriamine, triethylenetetramine, tetraethylenepentamine, iminobispropylamine, bis(hexamethylene)triamine, 1,3,6-trisaminomethylhexane, polymethylenediamine, trimethylhexamethylenediamine, and polyetherdiamine), cycloaliphatic amines (e.g., isophoronediamine, menthanediamine, N-aminoethylpiperazine, an adduct of 3,9-bis(3-aminopropyl)2,4,8,10-tetraoxaspiro(5, 5)undecane, bis(4-amino-3-methylcyclohexyl)methane, bis(4-aminocyclohexyl)methane, and modified products thereof), and aliphatic polyamide amines composed of a polyamine and dimer acid. One of these may be used singly, or two or more thereof may be used in combination.

In order to form a uniform three-dimensional net-like skeleton and uniform pores, and to ensure membrane strength and elasticity, it is preferable to use, among the above curing agents, at least one aromatic amine curing agent that has two or more primary amines in the molecule and that is selected from the group consisting of meta-phenylenediamine, diaminodiphenylmethane, and diaminodiphenyl sulfone, or at least one cycloaliphatic amine curing agent that has two or morse primary amines in the molecule and that is selected from the group consisting of bis(4-amino-3-methylcyclohexyl)methane and bis(4-aminocyclohexyl)methane.

As the combination of an epoxy resin and a curing agent, the combination of an aromatic epoxy resin and a cycloaliphatic amine curing agent, or the combination of a cycloaliphatic epoxy resin and an aromatic amine curing agent is preferred. These combinations allow an obtained porous epoxy resin sheet to have high heat resistance, and to be suitably used as a porous support for a composite semipermeable membrane.

In addition, the blending ratio of a curing agent to an epoxy resin is preferably such that the curing agent equivalent is 0.6 to 1.5 per one epoxy group equivalent. If the curing agent equivalent is less that 0.6, the crosslink density of a cured product becomes low, and as a result, heat resistance, solvent resistance and the like tend to be reduced. On the other hand, if the curing agent equivalent is beyond 1.5, an unreacted curing agent tends to remain, or enhancement of the crosslink density tends to be hindered. In the present intention, in order to obtain an intended porous structure, a curing accelerator may be added to the solution in addition to the aforementioned curing agents. A commonly-known substance can be used as the curing accelerator, and the examples include tertiary amines such as triethylamine and tributylamine, and imidazoles such as 2-phenyl-4-methylimidazole, 2-ethyl-4-methylimidazole, and 2-phenyl-4,5-dihydroxyimidazole.

The method for forming the thermosetting resin into a sheet is not particularly limited. A melt extrusion method, a method of curing the thermosetting resin placed on a flat plate or sandwiched by flat plates, a method of cutting a surface of a cured product of the resin into a thin film, or the like, can be selected as appropriate depending on required production conditions. Among such methods, from the standpoint of denseness of surface condition, a method can be particularly preferably used in which a surface of a cylindrical resin block formed of a cured product of a thermosetting resin composition containing a thermosetting resin, a curing agent, and a porogen, is cut with a predetermined thickness to fabricate a thermosetting resin sheet having an elongated shape, and then the porogen in the sheet is removed.

The cylindrical resin block can be fabricated by, for example, filling the resin composition into a cylindrical mold, and then curing the resin composition by heating as necessary. At this time, a bicontinuous structure is formed as a result of phase separation between the cross-linked resin and the porogen. Alternatively, a cylindrical resin block may be fabricated by using the cylindrical mold, and then the central portion of the cylindrical resin block may be stamped out to fabricate a hollow-cylindrical resin block.

When an epoxy resin is the temperature and the time period for curing a resin block are generally about 15 to 150°C and about 10 minutes to 72 hours, respectively, although depending on the types of the epoxy resin and the curing agent. In particular, the resin block is preferably cured at room temperature in order to form uniform pores. The initial curing temperature is preferably about 20 to 40°C, and the curing time period is preferably 1 to 48 hours. After the curing process, postcuring (aftertreatment) may be conducted in order to enhance the degree of crosslinking of the cross-linked epoxy resin. The conditions for postcuring are not particularly limited. The temperature is a room temperature or about 50 to 160°C, and the time period is about 2 to 48 hours.

The size of the resin block is not particularly limited. From the standpoint of production efficiency, the diameter is preferably 30 cm or more, and more preferably about 40 to 150 cm. In addition, the width of the block (the length in an axial direction) can be set as appropriate taking into account the size of an intended porous epoxy resin sheet, and is generally 20 to 200 cm. From the standpoint of handleability, the width is preferably about 30 to 150 cm.

A resin sheet having an elongated shape is fabricated by cutting the surface of the cylindrical resin block with a predetermined thickness while rotating the block about the cylinder axis. The line speed during the cutting is, for example, about 2 to 50 m/min. The cutting thickness is not particularly limited, and is appropriately set taking into account the thickness of a final product (porous sheet).

A porogen used for a phase separation method is preferably a water-soluble plasticizer in which an epoxy resin and a curing agent can be dissolved and which allows reaction-induced phase separation after the epoxy resin and the curing agent are polymerized. The examples include: cellosolves such as methyl cellosolve and ethyl cellosolve; esters such as ethylene glycol monomethyl ether acetate and propylene glycol monomethyl ether acetate; glycols such as polyethylene glycol and polypropylene glycol; and ethers such as polyoxyethylene monomethy ether and polyoxyethylene dimethyl ether. One of these may be used singly, or two or more thereof may be used in combination.

In order to form a uniform three-dimensional net-like skeleton and uniform pores, it is preferable to use, among the abode plasticizers, methyl cellosolve, ethyl cellosolve, polyethylene glycol having a molecular weight of 600 or less, ethylene glycol monomethyl ether acetate, propylene glycol monomethyl ether acetate, polypropylene glycol, polyoxyethylene monomethyl ether, or polyoxyethylene dimethyl ether. It is particularly preferable to use polyethylene glycol having a molecular weight of 200 or less, polypropylene glycol having a molecular weight of 500 or less, polyoxyethylene monomethyl ether, or propylene glycol monomethyl other acetate. One of these may be used singly, or more thereof may be used in combination.

In addition, a solvent in which a reaction product of an epoxy resin and a curing agent is soluble can be used as a porogen even if the epoxy resin or the curing agent is individually insoluble or poorly-soluble in the solvent at normal temperature. Examples of such a porogen include brominated bisphenol A-type epoxy resins (e.g., "Epicoat 5058" manufactured by Japan Epoxy Resin Co., Ltd).

After removal of a porogen, the porous epoxy resin sheet may be subjected to drying process or the like. The conditions for drying are not particularly limited. The drying temperature is generally about 40 to 120°C, and preferably about 50 to 80°C. The drying time period is about 3 minutes to 3 hours.

The porosity, the average pore diameter, the pore diameter distribution, and the like of the porous thermosetting resin sheet vary depending on the types and blending ratio of materials to be used, such as a resin, a curing agent, and a porogen, and depending on the reaction conditions for reaction-induced phase separation, such as heating temperature and heating time period. Therefore, in order to obtain the intended porosity, average pore diameter, and pore diameter distribution, optimal conditions are preferably selected by creating, for example, a phase diagram of the system. In addition, by controlling the molecular weight of the cross-linked resin, the molecular weight distribution, the viscosity of the system, the cross-linking reaction rate etc. at the time of phase separation, a bicontinuous structure of the cross-linked resin and the porogen can be fixed in a particular state, and thus a stable porous structure can be obtained.

When the porous thermosetting resin sheet is used as a support for a composite separation membrane, the average pore diameter of the porous resin sheet is preferably about 0.01 to 0.4 $\mu$m, and particularly: preferably 0.05 to 0.2 $\mu$m. In order to adjust the average pore diameter within the range, the amount of a porogen to be used is preferably about 40 to 80% by weight relative to the total weight of a resin, a curing agent, and the porogen, and more preferably about 60 to 70% by weight. Here, if the amount of the porogen is too small, the average pore diameter becomes too small, or pores tend not to be formed. On the other hand, if the amount of the porogen is too large, the average pore diameter becomes too large, and as a result, formation of a uniform skin layer becomes difficult when a composite separation membrane is produced, and the separation performance tends to be remarkably reduced. As another method employed particularly when epoxy resins are used, a method using a mixture of two or more types of epoxy resins having different epoxy equivalents is also preferred. In this case, the difference between the epoxy equivalents is preferably 100 or more, and an epoxy resin which is liquid at normal temperature and an epoxy resin which is solid at normal temperature are preferably mixed and used.

The porosity can be measured by the following method. First, an object to be measured is cut into a predetermined shape (e.g., a circle having a diameter of 6 cm), and the volume and weight are obtained. The obtained results are substituted into the following expression to calculate the porosity.

$$\text{Porosity (\%)} = 100 \times (V - (W/D))/V$$

V: Volume ($cm^3$)

W: Weight (g)

D: Average density of components ($g/cm^3$)

The type of a composite separation membrane for which a thermosetting resin sheet is used as a support is are not particularly limited. The examples include a composite semipermeable membrane in which a polyamide-based skin layer is formed on a porous epoxy resin sheet. When the skin layer is formed on a surface size of the porous epoxy resin sheet, since the epoxy resin sheet is hydrophobic, surface modification treatment (for enhancement of hydrophilicity, increase of surface roughness, for example), such as atmospheric-pressure plasma treatment and alcohol treatment, is preferably performed onto the surface on which the skin layer is formed. Performing this treatment improves adhesiveness between the porous epoxy resin sheet and the skin layer, thus making it possible to produce a composite semipermeable membrane in which lifting size of the skin layer (a phenomenon in which the skin layer is swelled into a semicircular shape because of, for example, entry of water between the porous epoxy resin sheet and the skin layer) or the like is less likely to occur.

The atmospheric-pressure plasma treatment is preferably conducted with a discharge intensity of about 0.1 to 7.5 W ·sec/$cm^2$ under an atmosphere of a nitrogen gas, an ammonium gas, or an inert gas such as helium and argon. In addiction, the alcohol treatment is preferably conducted by of an aqueous solution containing 0.1 to 90% by of a monohydric alcohol such as methyl alcohol, ethyl alcohol, n-propyl alcohol, isopropyl alcohol, and t-butyl alcohol, or by immersion in the aqueous solution.

The thickness of the porous thermosetting resin sheet is not particularly limited, and is, for example, about 10 to 300 $\mu$m. If the thickness of the porous thermosetting resin sheet is within the following advantage can be obtained. That is, in the case where the porous thermosetting resin sheet is a porous epoxy resin sheet, the porous thermosetting resin sheet can be suitably used for a device separator, a water treatment membrane, etc. In the case of use for a device separator, the thickness of the porous epoxy resin sheet is, for example, 10 to 50 $\mu$m, and preferably 15 to 40 $\mu$m. In the case of use for a water treatment membrane, such as use as a support for a reverse osmotic membrane, the thickness size of the porous epoxy resin sheet is, for example, 30 to 250 $\mu$m, and preferably 50 to 200 $\mu$m.

The width of the porous thermosetting resin sheet can be set as appropriate depending on the intended use. From the of handleability, in the case where the porous thermosetting resin sheet is a porous epoxy resin sheet and is used for a device separator, the width is, for example, 3 to 50 cm, and preferably 5 to 30 cm. In the of use for a reverse osmotic membrane, the width is, for example, 10 to 200 cm, and preferably 40 to 150 cm.

The value of the average pore diameter of the porous thermosetting resin sheet measured by a mercury intrusion method is, for example, 0.01 to 0.4 $\mu$m, and preferably 0.5 to 0.2 $\mu$m. If the average pore diameter is too large, formation of a uniform skin layer is difficult when the porous thermosetting resin sheet is used as a porous support for a composite semipermeable membrane, whereas if the average pore diameter is too small, the performance of the composite semipermeable membrane tends to be impaired. In addiction, the porosity is preferably 20 to 80%, and more preferably 30 to 60%.

Hereinafter, a composite semipermeable membrane in which a polyamide-based skin layer is formed on a surface of a porous epoxy resin sheet will be particularly described. However, the present invention is not limited thereto.

The material for forming the skin layer is not particularly limited. For example, cellulose acetate, ethyl cellulose, polyether, polyester, or polyamide can be used. In the case of use for a reverse osmotic membrane for seawater desalination or the like, a polyamide-based skin layer formed by polymerizing a polyfunctional amine component and a polyfunctional acid halide component is preferably used.

The polyfunctional amine component includes aromatic, aliphatic, and cycloaliphatic polyfunctional amines having two or morse reactive amino groups.

Examples of aromatic polyfunctional amines include m-phenylenediamine, p-phenylenediamine, o-phenylenediamine, 1,3,5-triaminobenzene, 1,2,4-triaminobenzene, 3,5-diaminobenzoic acid, 2,4-diaminotoluene, 2,6-diaminotoluene, N,N'-dimethyl-m-phenylenediamine, 2,4-diaminoanisole, amidol, and xylylenediamine.

Examples of aliphatic polyfunctional amines include ethylenediamine, propylenediamine, tris(2-aminoethyl) amine, and n-phenyl-ethylenediamine.

Examples of cycloaliphatic polyfunctional amines include 1,3-diaminocyclohexane, 1,2-diaminocyclohexane, 1,4-diaminocyclohexane, piperazine, 2,5-dimethylpiperazine, and 4-aminomethylpiperazine.

One of these polyfunctional amines may be used singly, or two or more thereof may be used in combination. In order to obtain a skin layer having high salt rejection performance, an aromatic polyfunctional amine is preferably used.

The polyfunctional acid halide component includes aromatic, aliphatic, and cycloaliphatic polyfunctional acid halides having two or more reactive carbonyl groups.

Examples of aromatic polyfunctional acid halides include trimesic acid trichloride, terephthalic acid dichloride, isophthalic acid dichloride, biphenyl dicarboxylic acid dichloride, naphthalene dicarboxylic acid dichloride, benzenetrisulfonic acid trichloride, benzenedisulfonic acid dichloride, and chlorosulfonyl benzene dicarboxylic acid dichloride.

Examples of aliphatic polyfunctional acid halides include propanedicarboxylic acid dichloride, butanedicarboxylic acid dichloride, pentanedicarboxylic acid dichloride, propanetricarboxylic acid trichloride, butanetricarboxylic acid trichloride, pentanetricarboxylic acid trichloride, glutaryl halides, and adipoyl halides.

Examples of cycloaliphatic polyfunctional acid halides include cyclopropanetricarboxylic acid trichloride, cyclobutanetetracarboxylic acid tetrachloride, cyclopentanetricarboxylic acid trichloride, cyclopentanetetracarboxylic acid tetrachloride, cyclohexanetricarboxylic acid trichloride, tetrahydrofuran tetracarboxylic acid tetrachloride, cyclopentanedicarboxylic acid dichloride, cyclobutanedicarboxylic acid dichloride, cyclohexanedicarboxylic acid dichloride, and tetrahydrofurandicarboxylic acid dichloride.

One of these polyfunctional acid halides may be used singly, or two or more thereof may be used in combination. In order to obtain a skin layer having high salt rejection performance, an aromatic polyfunctional acid halide is preferably used. In addition, a crosslink structure is preferably formed by using a polyfunctional acid halide having three or more valencies as at least part of the polyfunctional acid halide component.

Furthermore, in order to improve the performance of the skin layer containing a polyamide-based resin, copolymerization may be carried out with a polymer such as polyvinyl alcohol, polyvinyl pyrrolidone, and polyacrylic acid, or with a polyhydric alcohol such as sorbitol and glycerin.

The method for forming a skin layer containing a polyamide-based resin on a surface of a porous epoxy resin sheet is not particularly limited either, and any commonly-known method can be used. The examples include an interfacial polymerization method, a phase separation method, and a thin film application method. Specific Examples of the interfacial polymerization method include: a method in which an amine aqueous solution containing a polyfunctional amine component and an organic solution containing a polyfunctional acid halide component are brought into contact with each other and thereby interfacially polymerized to form a skin layer, and the skin layer is placed on a porous epoxy resin sheet; and a method in which interfacial polymerization is carried out on a porous epoxy resin sheet to form a skin layer made of a polyamide-based resin directly on the porous epoxy resin sheet. The details of the conditions etc. of such interfacial polymerization methods are described in JPS58(1983)-24303, JPH1(1989)-180208, etc., and the commonly-known techniques can be employed as appropriate. In general, a method is preferably used in which an aqueous solution coating layer formed of an amine aqueous solution containing a polyfunctional amine component is formed on a porous support, and then an organic solution containing a polyfunctional acid halide component and the aqueous solution coating layer are brought into contact with each other and thereby interfacially polymerized to form a skin layer.

In the interfacial polymerization method, the concentration of the polyfunctional amine component in the amine aqueous solution is not particularly limited, and is preferably 0.1 to 5% by weight, and more preferably 1 to 4% by weight. If the concentration of the polyfunctional amine component is too low, defects such as pinholes become more likely to occur in the skin layer, and the salt rejection performance tends to be reduced. On the other hand, if the concentration of the polyfunctional amine component is too high, the thickness becomes too large and the permeation resistance increases accordingly, and as a result, the permeation flux tends to be reduced.

The concentration of the polyfunctional acid halide component in the organic solution is not particularly limited, and is preferably 0.01 to 5% by weight, and more preferably 0.05 to 3% by weight. If the concentration of the polyfunctional acid halide component is lower than 0.01% by weight, an unreacted polyfunctional amine component becomes more likely to remain, or defects such as pinholes become more likely to occur in the skin layer, and as a result, the salt rejection performance tends to be reduced. On the other hand, if the concentration of the polyfunctional acid halide component is higher than 5% by weight, an unreacted polyfunctional acid halide component becomes more likely to remain, or the membrane thickness becomes too large and the permeation resistance increases accordingly, and as a result, the permeation flux tends to be reduced.

The organic solvent used for the organic solution is not particularly limited, and any organic solvent can be used as long as the solvent has a low solubility in water, does not deteriorate a porous support, and dissolves a polyfunctional acid halide component. The examples include: saturated hydrocarbons such as cyclohexane, heptane, octane, and nonane; and halogen-substituted hydrocarbons such as 1,1,2-trichlorofluoroethane. A saturated hydrocarbon having a boiling point of 300°C or lower is preferred, and a saturated hydrocarbon having a boiling point of 200°C or lower is more preferred.

Various types of additives can be added to the amine aqueous solution and the organic solution for the purpose of facilitating membrane formation or improving the performance of a composite semipermeable membrane to be obtained. Examples of the additives include: surfactants such as sodium dodecylbenzenesulfonate, sodium dodecyl sulfate, and sodium lauryl sulfate; basic compounds for removing halogenated hydrogen generated by polymerization, such as sodium hydroxide, trisodium phosphate, and triethylamine; acylation catalysts; and compounds having a solubility parameter of 8 to 14 $(cal/cm^3)^{1/2}$ which are described in JPH8(1996)-224452.

The time period from application of an amine aqueous solution onto a porous epoxy resin sheet until application of an organic solution is preferably 180 seconds or shorter, and more preferably 120 seconds or shorter, although depending on the composition and viscosity of the amine aqueous solution and on the pore diameter of the surface of the porous epoxy resin sheet. If the time interval between the applications of the solutions is too long, there is a risk that the amine aqueous solution will permeate and diffuse deep into the porous epoxy resin sheet, resulting in a large amount of an unreacted polyfunctional amine component remaining in the porous epoxy resin sheet. Furthermore, the unreacted polyfunctional amine component having permeated deep into the porous epoxy resin sheet tends to be difficult to remove even by a subsequent membrane cleaning treatment. An excess amine aqueous solution may be removed after the porous epoxy resin sheet is coated with the amine aqueous solution.

Preferably, after an aqueous solution coating layer made of an amine aqueous solution and an organic solution are brought into contact with each other, an excess organic solution on a porous epoxy resin sheet is removed, and a film formed on the porous epoxy resin sheet is dried by heating at 70°C or higher to form a skin layer. Heating treatment of the formed film can enhance the mechanical strength, the heat resistance, etc. The heating temperature is more preferably 70 to 200°C, and particularly preferably 80 to 130°C. The heating time period is preferably about 30 seconds to 10 minutes, and more preferably about 40 seconds to 7 minutes.

The thickness of the skin layer formed on the porous epoxy resin sheet is not particularly limited, and is generally about 0.05 to 2 $\mu$m, and preferably 0.1 to 1 $\mu$m. A composite semipermeable membrane having the polyamide-based skin layer hat a salt rejection rate of preferably 98% or more, and more preferably 99% or more. In addition, a composite semipermeable membrane having a permeation flux of 0.8 $m^3/(m^2 \cdot day)$ or more can be preferably used.

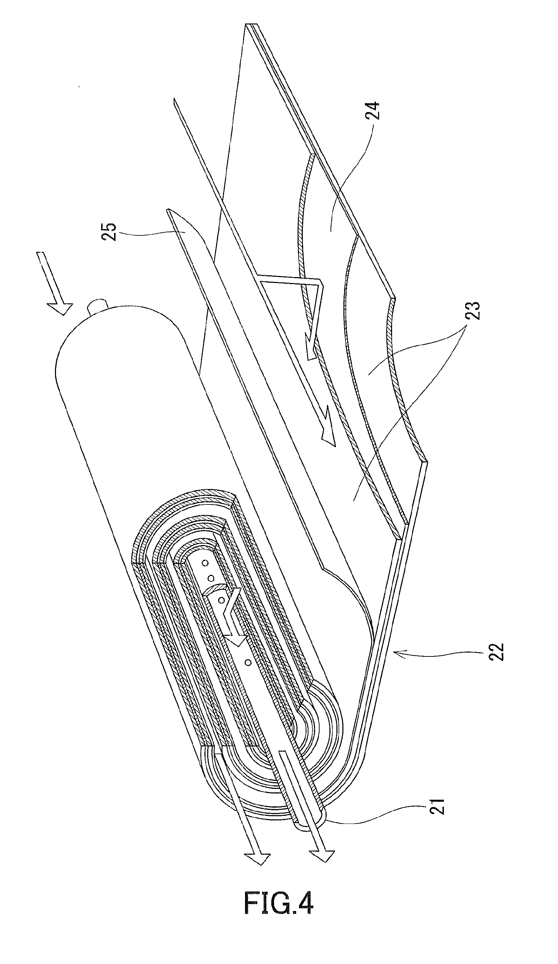

The use form of a composite separation membrane element using a composite separation membrane is not limited, and the examples include flat membrane form, tubular form, and hollow fiber form. In particular, a composite separation membrane can be suitably used for a spiral separation membrane element which can be obtained by fixing a layered body 22 shown in FIG. 4 by means of an end member and an external material.

As shown in FIG. 4, the layered body 22 includes a separation membrane 23 in the form of flat membrane, a supply-side flow path member 25 and a permeation-side flow path member 24 that are combined with the separation membrane 23, and a perforated hollow tube 21 (water collecting tube) around which the separation membrane 23, the supply-side flow path member 25, and the permeation-side flow path member 24 are spirally wound. The composite separation membrane produced by the method of the present embodiment can be used as the separation membrane 23.

Hereinafter, the present invention will be described in detail using Examples and Comparative Examples. However, the present invention is not limited thereto.

Examples

(Example 1)

An amount of 139 parts by weight of a bisphenol A-type epoxy resin (Epicoat 828 manufactured by Japan Epoxy Resin Co., Ltd), 93.2 parts by weight of a bisphenol A-type epoxy resin (Epicoat 1010 manufactured by Japan Epoxy Resin Co., Ltd), 52 parts by weight of bis(4-aminocyclohexyl)methane, and 500 parts by weight of polyethylene glycol 200 (manufactured by Sanyo Chemical Industries, Ltd.) were placed into a container, and stirred by using Three-One Motor at 400 rpm for 15 minutes. The obtained epoxy resin composition was filled into a hollow-cylindrical mold (outer diameter: 35 cm, inner diameter: 10.5 cm) up to a height of 30 cm, was room- temperature cured at 25°C for 12 hours, and was further cured by redaction at 130°C for 18 hours to fabricate a hollow-cylindrical resin block. The surface of this resin block was continuously sliced with a thickness of 135 $\mu$m by means of a cutting machine while rotating the resin block about the cylinder axis, to obtain an epoxy resin sheet having an elongated shape (width: 30 cm, length: 150 m).

Subsequently, a pure water bath of 50°C (first bath) and a pure water bath of 60°C (second bath) were prepared. The fabricated epoxy resin sheet was immersed in the first bath and subsequently in the second bath while the fabricated epoxy resin sheet was being conveyed at a line speed of 3 m/min. Then, the epoxy resin sheet was dried by a drying machine set at 50°C for 4 hours to obtain a porous epoxy resin sheet. The time period of immersion of the epoxy resin sheet in each bath was 26 seconds.

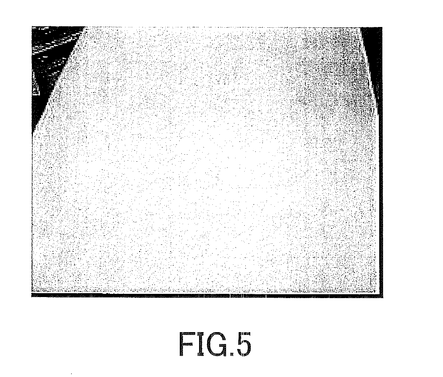

The glass-transition temperature (Tg) of the epoxy resin sheet and the remaining amount of polyethylene glycol (PEG) in the epoxy resin sheet were measured before the immersion in pure water. Similarly, the glass-transition temperature (Tg) of the porous epoxy resin sheet and the remaining amount of polyethylene glycol (PEG) in the porous epoxy resin sheet were measured after the immersion in the first bath, and measured also after the immersion in the second bath. The results are shown in Table 1. In addition, the appearance of the sheet visually observed had no crease or deformation, and was good. The state of the sheet is shown in FIG. 5.

(Method for measuring glass-transition temperature)

The glass-transition temperature was measured by using a temperature-modulated DSC (differential scanning calorimetry) (Q2000 manufactured by TA Instruments).

(Method for measuring remaining amount of polyethylene glycol)

The remaining amount of polyethylene glycol was measured by the following method. Specifically, polyethylene glycol was extracted from the epoxy resin sheet or the porous sheet by using acetonitrile, and the obtained extraction liquid was fractionated with HPLC (high-performance liquid chromatography). Then, the refraction index of a sample was measured by a RI (refraction index) measurement apparatus. The concentration of polyethylene glycol in the sample was calculated from the refraction index, and the weight of polyethylene glycol contained in a unit weight of the epoxy resin sheet or the porous sheet was calculated.

(Example 2)

A porous epoxy resin sheet was fabricated in the same manner as in Example 1 except that the temperature of the bathing liquid of the second bath was 80°C. The measurement results are shown in Table 1. In addition, the appearance of the sheet visually observed had no crease or deformation, and was good.

(Comparative Example 1)

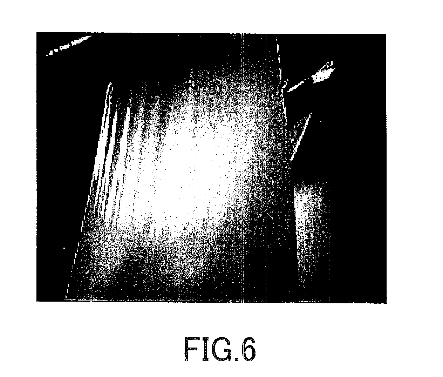

A porous epoxy resin sheet was fabricated in the same manner as in Example 1 except that the temperatures of the bathing liquids of both the first bath and the second bath were 60°C. The measurement results are shown in Table 1. In this case, when the appearance of the sheet was visually observed, the sheet was found to have been deformed into a corrugated plate shape. The state is shown in FIG. 6.

(Comparative Example 2)

A porous epoxy resin sheet was fabricated in the same manner as in Example 1 except that the temperatures of the bathing liquids of both the first bath and the second bath were 80°C. The measurement results are shown in Table 1. In this case, when the appearance of the sheet was visually observed, the sheet was found to have been deformed into a corrugated plate shape.

[Table 1]

| | Temperature of first bath (°C) | Temperature of second bath (°C) | Epoxy resin sheet | | Porous epoxy resin sheet after immersion in first bath | | Porous epoxy resin sheet after immersion in second bath | | |
|---|---|---|---|---|---|---|---|---|---|
| | | | Tg (°C) | Remaining amount of PEG (mg/g) | Tg (°C) | Remaining amount of PEG (mg/g) | Tg (°C) | Remaining amount of PEG (mg/g) | Appearance |
| Example 1 | 50 | 60 | 57.3 | 1500.0 | 89.9 | 91.4 | 115.3 | 19.3 | Good |
| Example 2 | 50 | 80 | | | 89.2 | 95.9 | 124.9 | 5.0 | Good |
| Com. Example 1 | 60 | 60 | | | 107.9 | 29.2 | 119.5 | 15.5 | Corrugated plate shape |
| Com. Example 2 | 80 | 80 | | | 119.8 | 15.2 | 127.9 | 3.0 | Corrugated plate shape |

(Example 3)

A porous sheet was obtained by removing polyethylene glycol from an epoxy resin sheet using the method described with reference to FIG. 3. Specifically, first, an epoxy resin sheet was fabricated in the same manner as in Example 1 except that the thickness was 90 $\mu$m, and a wound body (diameter: 200 mm) was obtained by winding the epoxy resin sheet around a core together with a net (spacer) made of a polyester resin. The wound body was placed in a pressure container, and extraction and removal of polyethylene glycol was carried out under the conditions indicated below.

First stage: 20°C, 15 liters/min, 90 min
Second stage: 50°C, 15 liters/min, 60 min
Third stage: 80°C, 4.8 liters/min, 60 min
Treatment liquid: Pure water

The concentration of polyethylene glycol in RO water (reverse osmosis water) obtained via the core (the perforated hollow tube 14 in FIG. 3) was measured. In the first stage, the concentration of polyethylene glycol in RO water measured four minutes after the start of passing water was 0.64% by weight. The concentration of polyethylene glycol in RO water obtained by flowing pure water after the end of the third stage was 0.09% by weight. The wound body was taken out from the pressure container, and the appearance of the porous epoxy resin sheet was visually observed. The appearance of the porous epoxy resin sheet of Example 3 had no crease or deformation, and was good.

(Comparative Example 3)

Similar to Example 3, a porous sheet was obtained by removing polyethylene glycol from an epoxy resin sheet using the method described with reference to FIG. 3. Specifically, first, an epoxy resin sheet was fabricated in the same manner as in Example 1 except that the thickness was 90 $\mu$m, and a wound body (diameter: 100 mm) was obtained by winding the epoxy resin sheet around a core together with a net (spacer) made of a polyester resin. The wound body was placed in a pressure container, and extraction and removal of polyethylene glycol was carried out under the conditions indicated below.

First stage: 80°C, 20 liters/min, 5 min
Second stage: 25°C, 20 liters/min, 5 min
Treatment liquid: Pure water

The wound body was taken out from the pressure container, and the appearance of the porous epoxy resin sheet was visually observed. It was found that the porous epoxy resin sheet of Comparative Example 3 was shrunk, and a trace of the spacer and creases were left on the surface of the sheet. The amount of polyethylene glycol remaining in the porous epoxy resin sheet of Comparative Example 3 was measured. The concentration in a portion corresponding to a central part of the wound body was 0.37 mg/g, the concentration in a portion corresponding to an intermediate part of the wound body wars 0.32 mg/g, and the concentration in a portion corresponding to an outer circumferential part of the wound body was 0.45 mg/g.

INDUSTRIAL APPLICABILITY

The porous thermosetting resin sheet and the composite separation membrane of the present invention can be used for purification of waste water, desalination of sea water, separation of medical ingredients, condensation of active ingredients of food products, separation of gas components, forward osmosis treatment, etc. The porous thermosetting resin sheet of the present invention can also be used for a separator for devices.

DESCRIPTION OF THE REFERENCE NUMERALS

| | |
|---|---|
| 1 | Thermosetting resin sheet |
| 2 | Bathing liquid flow outlet |
| 3 | Bathing liquid supplying unit |
| 4 | Circulation pump |
| 5 | Impurity removing filter |
| 6 | Temperature adjuster |
| 7 | Bathing liquid discharge port |

**Claims**

1. A method for producing a porous thermosetting resin sheet, comprising the step of extracting and removing a porogen from a thermosetting resin sheet containing the porogen, wherein
   the porogen is extracted and removed by bringing the thermosetting resin sheet into contact with a first liquid that has a relatively low temperature, and subsequently bringing the thermosetting resin sheet into contact with a second liquid that has a relatively high temperature.

2. The method for producing a porous thermosetting resin sheet according to claim 1, wherein
   the first liquid and the second liquid are held in a first bath and a second bath, respectively, and
   the porogen is extracted and removed by immersing the thermosetting resin sheet in the first bath and subsequently in the second bath.

3. The method for producing a porous thermosetting resin sheet according to claim 1 or 2, wherein the temperature of the first liquid is lower than or equal to a glass-transition temperature of the thermosetting resin sheet that has not been brought into contact with the first liquid yet.

4. The method for producing a porous thermosetting resin sheet according to any one of claims 1 to 3, wherein the temperature of the second liquid is lower than or equal to a glass-transition temperature of the thermosetting resin sheet that has been brought into contact with the first liquid and that has not been brought into contact with the second liquid yet.

5. The method for producing a porous thermosetting resin sheet according to any one of claims 1 to 4, wherein the first liquid and the second liquid are each water or an aqueous solution.

6. The method for producing a porous thermosetting resin sheet according to any one of claims 1 to 5, wherein the temperature of the first liquid is 30°C or higher and 55°C or lower.

7. The method for producing a porous thermosetting resin sheet according to any one of claims 1 to 6, wherein the temperature of the second liquid is 60°C or higher and 90°C or lower.

8. The method for producing a porous thermosetting resin sheet according to any one of claims 1 to 7, wherein a time period for which the thermosetting resin sheet is in contact with the first liquid is longer than a time period for which the thermosetting resin sheet is in contact with the second liquid.

9. The method for producing a porous thermosetting resin sheet according to claim 2, wherein
   the thermosetting resin sheet has an elongated shape, and
   a conveyance route of the thermosetting resin sheet is set so that the thermosetting resin sheet being conveyed from a winding-off position to a winding-up position passes through the first bath and subsequently through the second bath.

10. The method for producing a porous thermosetting resin sheet according to claim 2, wherein the first bath and the second bath are each stirred, and the porogen is extracted and removed while the first liquid and the second liquid are flowing.

11. The method for producing a porous thermosetting resin sheet according to any one of claims 1 to 10, wherein the thermosetting resin is an epoxy resin.

12. The method for producing a porous thermosetting resin sheet according to any one of claims 1 to 11, wherein the porogen is polyethylene glycol.

13. A composite separation membrane comprising:

    a porous thermosetting resin sheet produced by the method according to any one of claims 1 to 12 and having an average pore diameter of 0.01 $\mu$m to 0.4 $\mu$m; and
    a polyamide-based skin layer provided on a surface of the porous thermosetting resin sheet.

14. A spiral separation membrane element comprising:

a perforated hollow tube; and

a layered body wound around the perforated hollow tube, the layered body comprising the composite separation membrane according to claim 13, and a flow path member combined with the composite separation membrane.

FIG.1

FIG.2

FIG.3

FIG.4

FIG.5

FIG.6

## INTERNATIONAL SEARCH REPORT

International application No.

PCT/JP2011/003766

### A. CLASSIFICATION OF SUBJECT MATTER

*C08J9/26*(2006.01)i, *B01D63/10*(2006.01)i, *B01D69/10*(2006.01)i, *B01D69/12* (2006.01)i, *B01D71/46*(2006.01)i, *B32B5/18*(2006.01)i, *B32B27/34*(2006.01)i, *B32B27/38*(2006.01)i, *C08L63/00*(2006.01)i

According to International Patent Classification (IPC) or to both national classification and IPC

### B. FIELDS SEARCHED

Minimum documentation searched (classification system followed by classification symbols)
C08J9/26, B01D63/10, B01D69/10, B01D69/12, B01D71/46, B32B5/18, B32B27/34, B32B27/38, C08L63/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-99654 A  (Nitto Denko Corp.), 06 May 2010 (06.05.2010), claims 1 to 6; paragraph [0072] & WO 2010/035807 A1 | 1-14 |
| A | JP 2006-257397 A  (Toray Industries, Inc.), 28 September 2006 (28.09.2006), paragraphs [0070], [0063] to [0065] (Family: none) | 1-14 |
| A | JP 2009-256592 A  (Fuji Film Kabushiki Kaisha), 05 November 2009 (05.11.2009), claim 1; paragraphs [0018], [0058], [0082] & US 2009/0239381 A1 | 1-14 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19 July, 2011 (19.07.11) | 02 August, 2011 (02.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/003766

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2004-25102 A (Saehan Industries Inc.),<br>29 January 2004 (29.01.2004),<br>claim 1; paragraph [0043]<br>& GB 2390042 A        & DE 10228148 A<br>& FR 2843045 A        & NL 1020950 C | 1-14 |
| A | JP 2010-121122 A (Nitto Denko Corp.),<br>03 June 2010 (03.06.2010),<br>claims 1 to 8; paragraph [0083]<br>& WO 2010/047383 A1 | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010099654 A
- JP 2007209412 A
- JP 2010121122 A
- JP S58198324303 B
- JP H11989180208 B
- JP H81996224452 B